# FASCICULE DE BREVET EUROPEEN

(11) **EP 0 612 016 B1**
(45) Date de publication et mention de la délivrance du brevet: **03.01.1996**
(21) Numéro de dépôt: 94400277.3
(22) Date de dépôt: 09.02.1994
(51) Int. Cl.: G06F 13/40

(54) **Procédé et dispositif de protection d'un bus série contre les courts-circuits**
Verfahren und Anordnung zum Schutz eines seriellen Bus gegen Kurzschluss
Method and apparatus to protect a serial bus against short circuits

(30) Priorité: 18.02.1993 FR 9301848
(43) Date de publication de la demande: 24.08.1994
(73) Titulaire: SGS-THOMSON MICROELECTRONICS S.A., F-94250 Gentilly (FR)
(72) Inventeur: Le Van Suu, Maurice, F-75116 Paris (FR)
(74) Mandataire: Schmit, Christian Norbert Marie

(56) Documents cités:
- EP-A- 0 049 917
- EDN ELECTRICAL DESIGN NEWS. vol. 36, no. 11 , 23 Mai 1991 , NEWTON, MASSACHUSETTS US , XP231145 PETER SAIC 'Data line senses remote shorts'

## Description

La présente invention se rapporte aux procédés qui permettent de protéger les circuits de connexion du type bus série contre les conséquences d'un court-circuit accidentel se produisant sur un tel bus. Elle concerne également les dispositifs permettant de mettre en oeuvre ce procédé.

On sait que pour constituer un réseau d'appareils communiquant entre eux dans les domaines du bâtiment intelligent, de la domotique, de l'informatique, de la robotique et de l'automobile, on utilise souvent des liaisons du type bus qui permettent, dans une large mesure, de ne pas se soucier de l'emplacement des appareils reliés sur cette liaison. Pour cela on utilise un ensemble de fils formant un câble qui dessert les différents points où les appareils communiquants sont susceptibles d'être placés, et l'on branche en dérivation sur ces fils chaque appareil communiquant par un connecteur permettant d'assurer l'émission et/ou la réception des signaux sur les fils, incluant l'alimentation de la partie communiquante. Différentes dispositions, un système hiérarchisé par exemple, permettent à chaque appareil relié au bus d'échanger des messages et/ou des informations d'ordre général et de trier parmi tous les messages et/ou informations circulant sur le bus ceux qui lui sont destinés. Les connecteurs et les messages et/ou informations émis sous forme d'impulsion de tension et/ou de courant doivent respecter un ou des portocoles d'émission et de réception obéissant à un certain nombre de normalisations destinées à permettre les échanges entre des appareils très divers, pouvant en particulier provenir de fournisseurs différents qui se soumettent à une même norme.

Les différentes normes peuvent être classées par famille selon différents critères. Ainsi on connait la famille des bus dans lesquels les informations circulent, par exemple pour un bus série, bit après bit d'un équipement à un autre. Ceci permet alors d'utiliser un circuit de transmission formé de deux fils seulement, connu sous le nom de "paire torsadée".

Compte tenu de cette transmission série, de la nature physique du câble, et de l'utilisation d'un courant relativement important, quelques dizaines de milliampères, pour transmettre les signaux, la vitesse de transmission d'un tel bus est limitée à quelques Mbits par seconde. En contrepartie, le matériel utilisé est bon marché.

En fait, le câble utilisé le plus courant comprend quatre fils, formant ce que l'on appelle une "quarte", et l'on utilise souvent les deux fils restant libres pour transmettre le courant d'alimentation de certains des appareils reliés au bus. En outre, on transmet généralement sur les deux fils de données les signaux symétriquement par rapport à la masse, et dans ce cas les tensions représentant ces signaux apparaissent comme complémentaires sur l'un et l'autre fils. Ceux-ci sont alors désignés généralement par les appellations "DONNEES" et "(DONNEES)" (les parenthèses sont ici utilisées à la place de la barre supérieure pour des raisons typographiques). Quand ces deux fils de données sont bouclés par des circuits de réception présentant l'impédance prévue, le même courant circule dans les deux fils mais en sens inverses, et les signaux sont donc bien complémentaires comme décrit plus haut.

On prévoit actuellement d'utiliser des circuits de ce type dans les applications dites de "domotique", qui s'étendent aussi bien à la commande des appareils ménagers dans un logement qu'à celle des différents accessoires d'une voiture automobile. Dans un cas comme dans l'autre, il faut assurer une très grande sécurité aux liaisons, bien que les circuits de liaison aux appareils ainsi reliés doivent être d'un prix très modique et sont donc d'une fiabilité très relative, et qu'ils soient également soumis aux agressions extérieures d'un environnement souvent rude, et aux mauvaises manipulations d'utilisateurs non professionnels. Le plus souvent l'installation comprend une unité centrale dans laquelle est concentrée l'essentiel de l'intelligence du système, et des unités décentralisées correspondant à des fonctions modulaires fonctionnant sous contrôle de l'unité centrale.

Il est alors relativement courant qu'une de ces unités décentralisées tombe en panne et que cette panne entraîne un court-circuit des fils de données. Le problème peut se poser également au niveau des fils d'alimentation, mais il est alors aisément résolu par un dispositif de mise hors circuit connu, tel qu'un fusible et/ou un dispositif électronique.

En ce qui concerne les fils de données, cette solution du style fusible peut difficilement être mise en oeuvre et le court-circuit entraîne alors comme première conséquence l'interruption totale des liaisons entre l'unité centrale et les autres unités décentralisées et donc une panne générale de l'ensemble du système. D'autre part si cette situation se prolonge on peut aboutir à une mise hors service des circuits de connexion au bus situés dans l'unité centrale. En effet ces circuits se mettent alors à débiter une intensité importante, pouvant se chiffrer en plusieurs dizaines d'ampères, voire plus, et même si ces circuits comportent des dispositifs d'auto-protection, le problème de localisation et de signalisation du produit defectueux n'est pas résolu pour autant.

Pour pallier ces inconvénients, l'invention propose un procédé de protection contre les courts-circuits d'un bus série comprenant au moins deux fils de données, essentiellement caractérisé en ce que l'on détecte l'égalité ou la quasi-égalité des potentiels sur les fils de données pour déterminer l'état de court-circuit du bus et qu'à partir de cette information on déconnecte une unité décentralisée responsable de ce court-circuit.

L'invention consiste en un procédé selon la revendication 1 et un dispositif pour la mise en oeuvre de ce procédé selon la revendication 6.

D'autres particularités et avantages de l'invention apparaîtront clairement dans la description suivante, présentée à titre d'exemple non-limitatif en regard des figures annexées qui représentent :
- la figure 1, un schéma d'un système communiquant comprenant une unité centrale et une unité décentralisée reliées par un bus série;
- la figure 2, le diagramme des signaux sur les fils d'alimentation du bus;
- la figure 3, un schéma des organes de protection selon l'invention contenus dans l'unité décentralisée; et
- la figure 4, un schéma des organes de protection selon l'invention contenus dans l'unité centrale.

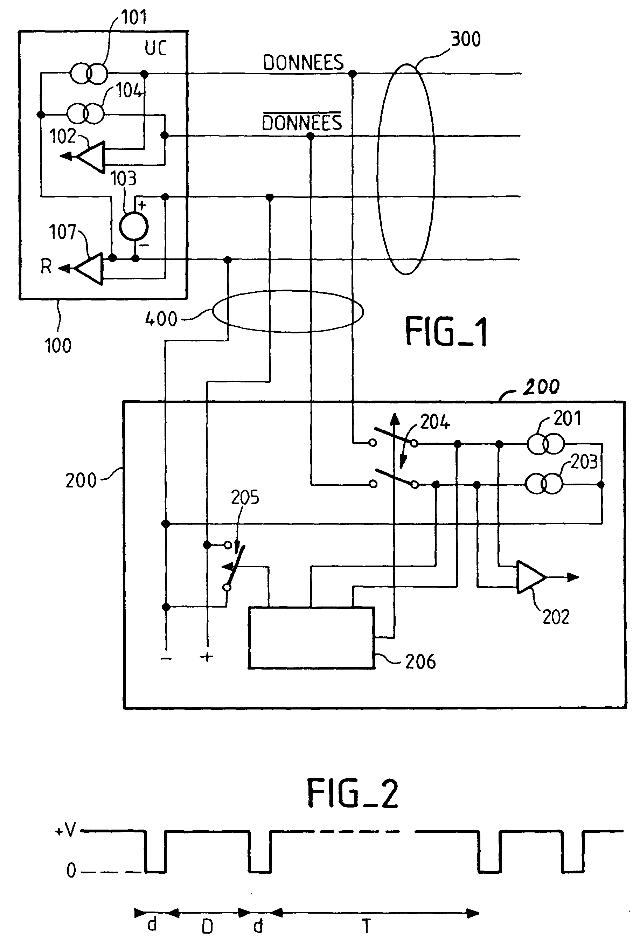

Le système représenté sur la figure 1 comprend une unité centrale 100 dite "UC" et une unité décentralisée 200 dite "UD" reliées ensemble par un bus série 300 sur lequel l'unité décentralisée est connectée en dérivation par l'intermédiaire de connexions 400.

De manière connue, les deux fils DONNEES et (DONNEES) du bus 300 sont reliés dans l'unité centrale, d'une part à deux sources de courant 101 et 104 commandées par les signaux à émettre (1 et 0) sur le bus en direction des unités décentralisées telles que 200 et, d'autre part à un amplificateur différentiel 102 permettant de détecter les signaux présents sur le bus et provenant en particulier de l'unité décentralisée 200. Ces sources et ce récepteur sont une représentation schématique des moyens d'émission et de réception des signaux de l'UC, comme ceux de l'UD décrits plus loin.

En outre, l'unité centrale comprend une source de tension 103 émettant sur les deux autres fils du bus une tension d'alimentation destinée à au moins l'une des unités décentralisées, l'UD 200 par exemple.

Les fils d'alimentation sont reliés à l'intérieur de l'unité décentralisée 200, de manière non représentée, aux circuits qui ont besoin d'être alimentés par cet intermédiaire.

Dans l'UD 200, les deux fils de données sont reliés, de manière connue, d'une part à un amplificateur différentiel 202 qui permet de détecter les signaux émis par les sources de courant 101 et 104, et d'autre part à deux sources de courant commandées 201 et 203 qui permettent d'émettre vers le bus les signaux destinés à l'unité centrale, ou éventuellement à d'autres unités décentralisées.

Selon l'invention, un détecteur 206 est connecté en parallèle sur les deux connexions provenant des fils de données du bus et il permet de détecter un éventuel court-circuit de ces fils de données en constatant la chute de tension qu'il provoque entre ceux-ci, pouvant éventuellement aboutir à l'égalité de leurs potentiels. Ce détecteur 206 permet alors de commander tout d'abord des moyens de déconnexion 204 qui permettent d'isoler les sources de courant 201 et 203 et l'amplificateur 202 des fils de raccordement 400 aux fils de données du bus 300.

Selon une autre caractéristique de l'invention, l'unité décentralisée comporte également des moyens de court-circuitage 205 permettant de court-circuiter, sous la commande du circuit de détection 206, les fils de raccordement 400 aux fils d'alimentation du bus 300 .

Les moyens de déconnexion 204 et de court-circuitage 205 ont été représentés sous la forme de relais électromécaniques, mais ils peuvent, bien entendu être réalisés par tout autre moyen permettant d'obtenir le même résultat, en particulier des dispositifs à semi-conducteurs.

Selon l'invention donc, lorsque le circuit de détection 206 décèle la mise en court-circuit des fils de données du bus 300, il commande dans un premier temps le fonctionnement des moyens de déconnexion 204, qui viennent alors isoler les sources de courant 201 et 203 et l'amplificateur 202.

On peut remarquer qu'on ne peut pas à ce stade savoir, tout au moins dans cet exemple de réalisation, à quel endroit s'est produit le court-circuit, qui pourrait tout aussi bien être situé dans une autre unité décentralisée, ou même au niveau du bus. Le circuit détecteur 206 est relié au bus de données, soit en aval des moyens de déconnexion 204 (comme montré sur la figure 1), soit en amont, soit même à cheval. Selon le cas, les décisions logiques à prendre en fonction de la détection d'un court-ciruit seront adaptées. Ainsi, pour le type de connexion représenté figure 1, si le court-circuit persiste après que les circuits de réception et d'émission de l'unité décentralisée 200 ont été déconnectés par le circuit 204, c'est que celle-ci est en cause. Le circuit de détection 206 commande alors le cas échéant les moyens 204 pour déconnecter définitivement les circuits de l'unité décentralisé 200. Si le circuit 206 est connecté en amont des moyens 204, des décision inverses doivent être prises.

Il est néanmoins possible que l'on se retrouve dans une situation où plusieurs unités décentralisées, voire toutes, se déconnectent d'une manière suffisamment simultanée pour qu'elles aient toutes l'impression d'être en panne alors qu'une seule est concernée. Pour éviter ce risque, on pourra prévoir une certaine temporisation, de l'ordre de quelques millisecondes par exemple, au niveau de la déconnexion, en s'arrangeant pour que les durées de ces temporisations soient réparties de manière aléatoire, par exemple lors de la fabrication des unités décentralisées. Ainsi chacune se déconnectera à son tour et se reconnectera si le court-circuit a disparu lors de sa déconnexion. On diminuera ainsi facilement les risques de déconnexion simultanée d'un grand nombre d'unités décentralisées, et le plus souvent seule l'unité concernée restera déconnectée.

L'unité décentralisée concernée étant ainsi déconnectée, il est souvent préférable de signaler sa déconnexion à l'unité centralisée 100. Or les systèmes utilisant un tel bus, devant généralement être bon marché, sont souvent simplifiés au maximum et on évite de mettre simultanément un émetteur et un récepteur dans les unités décentralisées quand cela n'est pas nécessaire. Ainsi une unité décentralisée uniquement destinée à exécuter des ordres ne comportera souvent pas d'émetteur et ne pourra pas envoyer d'accusé de réception des ordres reçus. A l'inverse une unité décentralisée uniquement destinée à servir de capteur ne comportera souvent pas de récepteur et ne pourra donc pas être interrogée à intervalle régulier par l'unité centralisée pour vérifier son bon état, comme cela se pratique souvent dans des systèmes plus élaborés mais plus chers.

Pour transmettre donc l'état de mise hors service de l'unité décentralisée vers l'unité centralisée, l'invention propose de court-circuiter, de manière temporaire et selon un code déterminé à l'avance, les fils d'alimentation électrique du bus à l'aide d'un moyen de court-circuitage tel que le relais 205 représenté sur la figure. Cette action s'effectue sous la commande du détecteur 206.

A titre d'exemple, on pourra par exemple prévoir deux créneaux de court-circuitage d'une durée d égale à 1 µs séparés par un intervalle d'une durée D égale à 100 µs. Une telle durée permet de transmettre un signal facilement détectable à l'unité centrale, sans toutefois risquer de détériorer les circuits d'alimentation contenus dans cette unité centrale ou de faire fonctionner les circuits de protection tels que des fusibles.

L'unité centrale comportera donc un circuit de détection formé par exemple par un amplificateur différentiel 107 branché aux bornes de la source de courant 103. Ce circuit détectera la chute de potentiel aux bornes de la source 103 et délivrera un signal R indiquant aux circuits logiques, non représentés, de l'unité centrale l'état de déconnexion de l'unité décentralisée 200.

Pour éviter une fausse détection, due par exemple à des transitoires provoqués par le fonctionnement des unités décentralisées, on peut filtrer les signaux appliqués à l'amplificateur 107 de manière à discriminer ces impulsions de 1 µs. De même, pour déterminer quelle est l'unité décentralisée qui est déconnectée, on pourra prévoir de coder la succession des impulsions, par exemple en modifiant la durée D qui les sépare, chaque durée étant caractéristique d'une unité décentralisée particulière.

A titre de perfectionnement, on peut prévoir de répéter le signal ainsi émis à intervalles réguliers, de manière à ce que s'il n'était pas pris en compte au moment de la déconnexion, il soit pris en compte lors d'une des répétitions ultérieures. Ceci est particulièrement utile dans les applications du style domotique, où l'on souhaite avoir une supervision des unités décentralisées sans que celle-ci ne soit nécessairement très fréquente. On pourra ainsi prévoir de répéter le signal d'avertissement par exemple une fois toutes les trente minutes, ou toutes les heures.

La signalisation depuis l'unité décentralisée vers l'unité centrale se présentera donc dans cet exemple comme une modulation de la tension d'alimentation +V représentée sur la figure 2, où l'on distingue les deux créneaux de durée d séparés par une durée D, et répétés àdes intervalles de temps T.

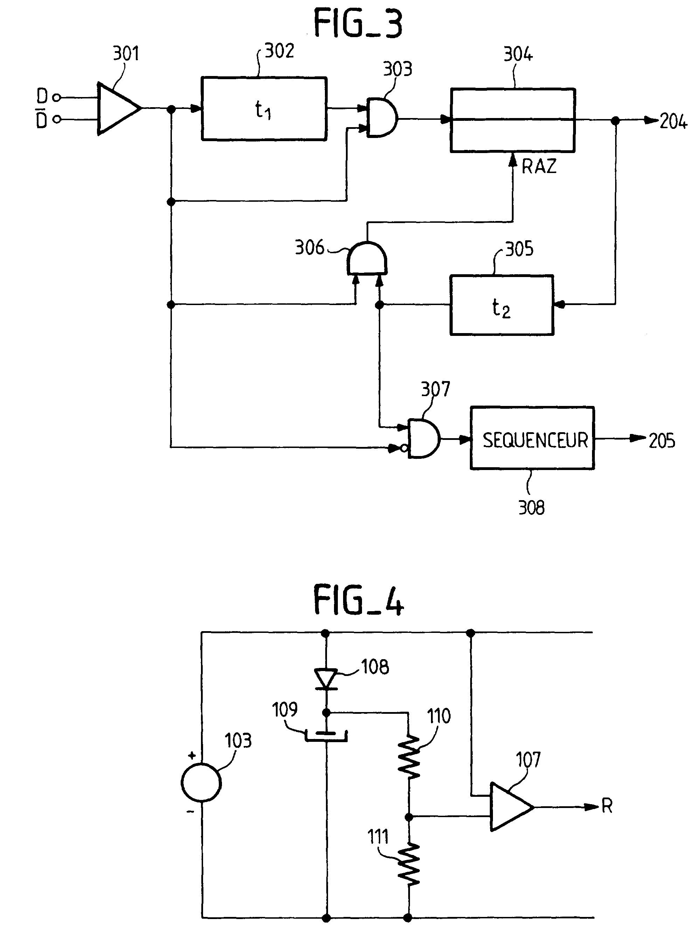

Le circuit 206 peut être réalisé par exemple de la manière représentée schématiquement sur la figure 3.

Les fils de données du bus D et (D) sont reliés à un amplificateur différentiel 301, qui est réglé de telle manière qu'il émette un signal lorsque les potentiels sur ces deux fils atteignent des valeurs en principe identiques, et en pratique seulement suffisamment rapprochées pour pouvoir détecter un court-circuit qui ne serait pas franc.

Ce signal est retardé d'une durée tl par un premier circuit à retard 302 dont la sortie est appliquée à une porte ET 303. Celle-ci reçoit aussi le signal de sortie de l'amplificateur 301. On a donc un signal en sortie de cette porte 303 seulement si le court-circuit a persisté pendant la durée tl, c'est-à-dire si aucune autre unité décentralisée ne s'est déconnectée pendant ce temps.

Le signal en sortie de cette porte 303 fait alors basculer une bascule 304 dont la sortie envoie un signal de commande au relais 204, lequel déconnecte alors l'unité décentralisée. Ce signal de commande est en outre retardé par un deuxième circuit à retard 305 d'une durée t2 suffisante pour laisser le relais 204 fonctionner et les potentiels sur les fils D et (D) retourner à leurs valeurs normales.

Si à la fin de cette durée t2 la situation est rétablie sur les fils D et (D), c'est que c'est une autre unité décentralisée qui est entrée en court-circuit. Pour tenir compte de cela, les sorties de l'amplificateur 301 et du circuit de retard 305 sont en outre reliées à une deuxième porte ET 306 dont la sortie est elle-même reliée à une entrée de remise à zéro RAZ de la bascule 304. Si donc la condition précédente, qui montre que c'est une autre unité décentralisée qui est en défaut, est remplie, la porte 306 vient remettre à zéro la bascule 304 et celle-ci vient rétablir la connexion de l'unité décentralisée au bus par l'intermédiaire du relais 204.

Si par contre à la fin de cette durée t2 la situation est restée anormale, la bascule 304 reste dans son état de commande d'ouverture du relais 204, et le signal du circuit de retard 305 est appliqué à une première entrée directe d'une troisième porte ET 307 qui reçoit sur une autre entrée, qui elle est inverseuse, le signal de sortie de l'amplificateur 301. Dans ces conditions la sortie de cette porte 307 commande le fonctionnement d'un séquenceur 308 seulement si l'unité décentralisée est bien fautive et déconnectée. La sortie de ce séquenceur vient alors commander le relais de court-circuitage 205 selon une séquence correspondant par exemple à celle de la figure 2. Un tel séquenceur 308 est un circuit couramment disponible dans le commerce pour pouvoir donner une suite d'états logiques séparés par des durées programmables à la demande.

Le circuit de détection 107 permettant dans l'unité centrale de détecter le signal de court-circuit arrivant sur les fils d'alimentation devra pouvoir suivre les signaux brefs du type de ceux représentés sur la figure 2, et de préférence délivrer un signal correspondant à des états logiques directement utilisables par les organes de traitement de l'information, du type microprocesseur, contenu dans l'unité centrale 100.

Pour cela on pourra utiliser par exemple un circuit du type de celui schématisé sur la figure 4.

Ce circuit comprend un amplificateur différentiel 107, pouvant éventuellement être monté en trigger de Schmidt, et dont la tension de sortie est limitée au niveau logique des circuits qui utiliseront ce signal de sortie R.

L'entrée + de cet amplificateur est reliée au fil d'alimentation positif.

Une diode 108 reliée à ce même fil positif vient charger un condensateur de forte capacité 109 relié en outre au fil - de l'alimentation. Ceci permet de garder aux bornes de ce condensateur un potentiel sensiblement égal à celui de l'alimentation pendant les brefs instants où les fils d'alimentation sont court-circuités par le relais 205.

Un pont formé de deux résistances 110 et 111 en série entre le point commun à la diode et au condensateur, et le fil négatif de l'alimentation permet d'obtenir une tension de seuil égale par exemple au quart de la valeur normale de la tension d'alimentation. Ce seuil sera considéré comme la valeur critique au-dessous de laquelle on pourra considérer que les fils d'alimentation sont court-circuités par le relais 205.

Lorsque la tension sur le fil positif descend au-dessous de la valeur de ce seuil, l'amplificateur 107 bascule et le potentiel sur sa sortie passe d'un état logique à une autre, ici d'un état haut à un état bas, ce qui constitue le signal de sortie R. Celui-ci est alors appliqué à des moyens de décodage de type connu, qui vont déterminer qu'elle est la durée et la séquence des interruptions d'alimentation dues au court-circuitage par le relais 205.

L'unité centrale ainsi prévenue de la déconnexion de l'unité décentralisée déclenchera alors les mesures prévues par ailleurs et qui ne font pas partie de l'invention.

## Revendications

1. Procédé de protection contre les courts-circuits d'un bus série comprenant au mois deux fils de données auxquels sont reliées une unité centrale (100) et une unité décentralisée (200) fonctionnant sous contrôle de l'unité centrale, l'unité décentralisée étant responsable d'un court-circuit du bus, caractérisé en ce que l'unité décentralisée détecte (206) l'égalité ou la quasi-égalité des potentiels sur les fils de données pour déterminer l'état de court-citcuit du bus et qu'à partir de cette information, elle se déconnecte (204) des fils de données du bus.

2. Procédé selon la revendication 1, caractérisé en ce que, le bus comportant en outre deux fils d'alimentation reliés à l'unité centrale (100) et à l'unité décentralisée (200) responsable du court-circuit, l'unité décentralisée court-circuite (205) temporairement les fils d'alimentation du bus pour signaler son état de déconnexion.

3. Procédé selon la revendication 2, caractérisé en ce que ce court-circuitage s'effectue pendant une durée très courte (d) répétée à intervalles de temps très long (T).

4. Procédé selon la revendication 3, caractérisé en ce que ce court-circuitage s'effectue sous la forme d'une salve d'au moins deux durées très courtes (d) séparées par une durée sensiblement plus longue (D) et répétée au bout d'une durée beaucoup plus longue (T).

5. Procédé selon l'une quelconque des revendications 1 à 4, caractérisé en ce que la déconnexion (204) des fils de données est effectuée avec un retard aléatoire (t1) selon l'unité décentralisée concernée, de manière à pouvoir isoler seulement l'unité décentralisée responsable du court-circuit.

6. Dispositif pour la mise en oeuvre du procédé selon l'une quelconque des revendications 1 à 5 et comprenant ledit bus série, ladite unité centrale (100) et ladite unité décentralisée (200), caractérisé en ce que l'unité décentralisée (200) responsable du court-circuit comprend des moyens (301) pour détecter l'égalisation du potentiel des fils de données du bus (D, (D)) et des moyens (304, 204) pour se déconnecter des fils de données du bus, sous la commande des moyens de détection.

7. Dispositif selon la revendication 6, caractérisé en ce que la dite unité décentralisée (200) comprend en outre des moyens (308, 205) pour court-circuiter, selon une séquence déterminée, ses fils d'alimentation.

## Patentansprüche

1. Verfahren zum Schutz eines seriellen Bus gegen Kurzschluß, wobei der Bus mindestens zwei Datenlinien umfaßt, an die eine Zentraleinheit (100) und eine durch die Zentraleinheit gesteuerte dezentralisierte Einheit (200) angeschlossen sind, wobei die dezentralisierte Einheit für einen Kurzschluß im Bus verantwortlich ist,
dadurch gekennzeichnet, daß die dezentralisierte Einheit die Gleichheit oder Quasi-Gleichheit der Potentiale an den Datenlinien erkennt (206), um den Kurzschlußzustand des Bus zu bestimmen, und daß sie aufgrund dieser Information ihre Verbindung zu den Datenlinien des Bus trennt (204).

2. Verfahren nach Anspruch 1,
dadurch gekennzeichnet, daß, da der Bus ferner zwei Versorgungslinien aufweist, die mit der Zentraleinheit (100) und der für den Kurzschluß verantwortlichen dezentralisierten Einheit (200) verbunden sind, die dezentralisierte Einheit (200) zeitweise die Versorgungslinien des Bus kurzschließt (205), um ihren Zustand der getrennten Verbindung anzuzeigen.

3. Verfahren nach Anspruch 2,
dadurch gekennzeichnet, daß dieses Kurzschließen während einer Zeitdauer (d) erfolgt, die sehr kurz ist und in sehr langen Zeitintervallen (T) wiederholt wird.

4. Verfahren nach Anspruch 3,
dadurch gekennzeichnet, daß dieses Kurzschließen in Form einer Salve von mindestens zwei sehr kurzen Zeitdauern (d), die durch eine deutlich längere Zeitdauer (D) getrennt sind, erfolgt, die nach einer viel längeren Zeitdauer (T) wiederholt wird.

5. Verfahren nach einem der Ansprüche 1 bis 4,
dadurch gekennzeichnet, daß das Abtrennen (204) von den Datenlinien mit einer zufälligen Verzögerung (t1) je nach der betroffenen dezentralisierten Einheit in einer Weise erfolgt, daß die für den Kurzschluß verantwortliche dezentralisierte Einheit allein isoliert werden kann.

6. Vorrichtung zur Durchführung des Verfahrens nach einem der Ansprüche 1 bis 5 und bestehend aus dem genannten seriellen Bus, der genannten Zentraleinheit (100) und der genannten dezentralisierten Einheit (200),
dadurch gekennzeichnet, daß die für den Kurzschluß verantwortliche dezentralisierte Einheit (200) Mittel (301) aufweist, um die Angleichung des Potentials der Datenlinien des Bus (D, (D)) zu erkennen, sowie Mittel (304, 204) aufweist, um sich unter Steuerung durch die Erkennungsmittel von den Datenlinien des Bus abzutrennen.

7. Vorrichtung nach Anspruch 6,
dadurch gekennzeichnet, daß die genannte dezentralisierte Einheit (200) ferner Mittel (308, 205) aufweist, um gemäß einer bestimmten Sequenz ihre Versorgungslinien kurzzuschließen.

## Claims

1. Method for protecting against short-circuits in a serial bus, comprising at least two data wires to which a central unit (100) and a decentralized unit (200) operating under the control of the central unit are connected, the decentralized unit being responsible for a short-circuit in the bus, characterized in that the decentralized unit detects (206) the equality or the quasi-equality of the potentials on the data wires in order to determine the short-circuit state of the bus and in that, based on this information, it disconnects itself (204) from the data wires of the bus.

2. Method according to Claim 1, characterized in that, the bus also having two supply wires connected to the central unit (100) and to the decentralized unit (200) which is responsible for the short-circuit, the decentralized unit temporarily short-circuits (205) the supply wires of the bus to indicate its state of disconnection.

3. Method according to Claim 2, characterized in that the short-circuiting takes place for a very short time period (d) repeated at very long time intervals (T).

4. Method according to Claim 3, characterized in that the short-circuiting takes place in the form of a burst of at least two very short time periods (d) separated by a substantially longer time period (D) and repeated at the end of a much longer time period (T).

5. Method according to any one of Claims 1 to 4, characterized in that the disconnection (204) of the data wires is effected with a random delay (t1) according to the decentralized unit in question, so as to be able to isolate only the decentralized unit responsible for the short-circuit.

6. Device for implementing the method according to any one of Claims 1 to 5 and comprising the said serial bus, the said central unit (100) and the said decentralized unit (200), characterized in that the decentralized unit (200) responsible for the short-circuit comprises means (301) for detecting the equalization of the potential of the data wires of the bus (D, (D)) and means (304, 204) for disconnecting itself from the data wires of the bus, under the control of the detection means.

7. Device according to Claim 6, characterized in that the said decentralized unit (200) also comprises means (308, 205) for short-circuiting its supply wires in a given sequence.
